# EUROPÄISCHE PATENTSCHRIFT

(11) **EP 2 899 446 B1**
(45) Veröffentlichungstag und Bekanntmachung des Hinweises auf die Patenterteilung: **12.12.2018**
(21) Anmeldenummer: 14152072.6
(22) Anmeldetag: 22.01.2014
(51) Int. Cl.: B29C 65/00, B29C 65/34, F16L 47/03

(54) **Teleskopfitting**
Telescopic fitting
Raccord télescopique

(43) Veröffentlichungstag der Anmeldung: 29.07.2015
(73) Patentinhaber: Georg Fischer Rohrleitungssysteme AG, 8201 Schaffhausen (CH)
(72) Erfinder: Wermelinger, Jörg, 8200 Schaffhausen (CH); Straub, Frank, 8207 Schaffhausen (CH); Hein, Oliver, 8246 Langwiesen (CH); Schlegel, Andreas, 8135 Langnau am Albis (CH); Frehner, Daniel, 5400 Baden (CH); Furrer, Florian, 8006 Zürich (CH)
(74) Vertreter: Fenner, Seraina

(56) Entgegenhaltungen:
- EP-A1- 0 521 276
- WO-A1-2009/012823
- WO-A2-2012/101322
- DE-A1-102009 048 578
- DE-C1- 19 519 341
- GB-A- 2 312 264
- US-A- 4 718 698
- US-A- 4 852 914

## Beschreibung

Die Erfindung betrifft eine Anordnung umfassend einen Fitting zum Verbinden von Rohrleitungen vorzugsweise Kunststoffrohrleitungen enthaltend mindestens ein Teleskoprohr und eine Teleskop-Elektroschweissmuffe mit mindestens einer Schweisszone enthaltend vorzugsweise mindestens eine Heizdrahtwicklung, wobei das Teleskoprohr vor der Verschweissung mit der Teleskop-Elektroschweissmuffe verschiebbar in der Teleskop-Elektroschweissmuffe angeordnet ist und nach der Verschweissung mit der Teleskop-Elektroschweissmuffe fest verschweisst ist.

Solche Fittings werden hauptsächlich in der Gas-und Wasserversorgung eingesetzt, wo grossdimensionierte Rohrleitungen zum Einsatz kommen. Die letzte Schweissung einer Rohrleitung, bei der die Rohrleitungen miteinander zu verbinden sind, stellt dann meist ein Problem dar, da die zu verbindenden Rohrleitungsenden sich nicht mehr in Achsrichtung verschieben lassen. Aufgrund dessen, werden meist Elektroschweissmuffen eingesetzt, die dann als Verbindungsglied der beiden Rohrenden dienen.

Nachteilig dabei ist jedoch, dass je grösser die Rohrleitung dimensioniert ist, je grösser ist auch der Schweissspalt, der zwischen dem zu verschweissenden Aussendurchmesser der Rohrenden und dem Innendurchmesser der Elektroschweissmuffe auftritt. Je grösser der Schweissspalt ausfällt, je schwieriger ist es eine optimale Schweissung zwischen Elektroschweissmuffe und dem zu verbindendem Rohrende zu erzielen. Zudem müssen die Rohrenden vor der Schweissung noch bearbeitet bzw. geschält werden um die äusserste Schicht, welche sich durch ihre oxidierte und verschmutzte Aussenfläche nicht für eine Schweissung eignet, zu entfernen. Das stellt einen erheblichen zusätzlichen Aufwand dar und ist meist auf Baustellen nicht einfach und optimal umsetzbar.

Ein weiterer Nachteil einer Verbindung mit einer aus dem Stand der Technik bekannten Elektroschweissmuffe liegt auch darin, dass Rohre meist immer oval sind bis sie auf der Baustelle ankommen, dies erschwert das Darüberschieben einer Elektroschweissmuffe immens, da sie nur mit grossem Aufwand in runde Elektroschweissmuffen einschiebbar sind und der Verlauf des Schweissspalts dadurch auch nicht regelmässig ausfällt.

Die KR-10-0960602 B1 zeigt eine Elektroschweissmuffe in der ein Fitting angeordnet ist, in welches das anzuschliessende Rohrleitungsende eingesteckt wird und durch Klemmung und Sicherungsring befestigt wird. In das andere Ende der Elektroschweissmuffe wird das anzuschliessende Rohrende direkt eingeschoben und durch die Elektroschweissung verbunden.

Nachteilig hierbei ist, dass auch bei diesem Verbindungssystem, die zu verbindende Rohrleitungen direkt mit der Elektroschweissmuffe verbunden werden, womit die Nachteile eines grossen Schweissspalts nicht ausgeräumt werden können.

Die US 4'852'914 offenbart eine glockenförmige Muffe mit einer Heizdrahtwicklung zum direkten Verschweissen mit dem anzuschliessenden Rohrleitungsende.

Die US 4'718'698 offenbart eine Elektroschweissmuffe in der Büchsen angeordnet sind auf die die zu verschweissenden Rohrenden aufgeschoben werden, wobei auch hier die Rohrleitungssenden direkt mit der Elektroschweissmuffe verschweisst werden.

Die DE 10 2009 018 578 A1 offenbart ein Verbindungselement, welches ineinander steckbare Hülsen aufweist, die durch aneinandergereihte Hinterschnitte fixiert sind.

Es ist Aufgabe der Erfindung eine Anordnung umfassend einen Fitting vorzuschlagen, wobei das Fitting als Verbindungsstück zwischen Rohrleitungsenden dient sowie eine zu grosse und ungleichmässige Schweissspaltbildung vermeidet bzw. dass eine optimale Schweissung auch für grossdimensionierte Rohrleitungen gewährleistet ist.

Diese Aufgabe wird erfindungsgemäss dadurch gelöst, dass die stirnseitigen Enden des Fittings als Stumpfschweissverbindung zum Stumpfschweissen mit den anzuschliessenden Rohrleitungsenden ausgebildet sind, wobei die Anordnung durch die folgenden Schritte ausgebildet ist: durch Stumpfschweissen verbinden der Elektroschweissmuffe mit dem einen Rohrleitungsende, wobei das Teleskoprohr immer noch im eingefahrenen Zustand in der Teleskop-Elektroschweissmuffe angeordnet ist; Ausziehen des Teleskoprohres aus der Teleskop-Elektroschweissmuffe und Stumpfschweissen mit dem anderen Rohrleitungsende; anschliessendes Verschweissen des Teleskoprohres mit der Teleskop-Elektroschweissmuffe im Bereich der Schweisszone mittels Heizwicklung.

Dadurch, dass das Fitting eine Teleskop-Elektroschweissmuffe beinhaltet in dem ein Teleskoprohr angeordnet ist und dadurch, dass die anzuschliessenden Rohrenden mit der Stirnseite bzw. dem Stumpfschweissverbindungsende des Teleskoprohres wie auch der Teleskop-Elektroschweissmuffe verschweisst werden, kann ein Einstecken der Rohrleitungsenden in eine Elektroschweissmuffe vermieden werden. Aufgrund dessen ergibt sich mithilfe der vorliegenden Erfindung nur ein minimaler Schweissspalt zwischen Aussendurchmesser des Teleskoprohres und dem Innendurchmesser der Teleskop-Elektroschweissmuffe. Das Teleskoprohr, welches in der Teleskop-Elektroschweissmuffe verschiebbar angeordnet ist, ist bis zur Montage des Fittings in der Muffe nahezu passgenau eingesetzt bzw. beinahe spaltfrei in der Muffe angeordnet, so dass kein unerwünscht grosser Schweissspalt zwischen Teleskop-Elektroschweissmuffe und Teleskoprohr auftritt. Dies ist möglich da das komplette Fitting noch im Werk hergestellt wird und das einzusetzende Teleskoprohr genau auf die Teleskop-Elektroschweissmuffe angepasst werden kann und die benötigten Dimensionen genau eingehalten bzw. mit einer Toleranz von -1‰ bis 0 des Aussendurchmessers des Teleskoprohrs für den Aussendurchmesser des Teleskoprohres und 0 bis +1%o des Innendurchmessers der Elektroschweissmuffe für den Innendurchmesser der Teleskop-Elektroschweissmuffe hergestellt, werden können, wodurch ein minimaler Spalt von 0 bis 2%o des Aussendurchmessers des Teleskoprohr bzw. des Innendurchmessers der Teleskop-Elektroschweissmuffe erreicht wird.

Durch das erfindungsgemässe Fitting 1 ist ein Einführen eines ovalen Rohrleitungsendes in eine Elektroschweissmuffe nicht mehr notwendig. Beim Stumpfschweissen der Rohrleitungsenden mit den

Stumpfschweissverbindungsenden des erfindungsgemässen Fittings besteht eine grössere Toleranz in Bezug auf die Ovalität. So ist eine gute Stumpfschweissung durchaus möglich, wenn auch das anzuschliessende Rohrleitungsende eine gewisse Ovalität aufweist, welches dann mit den runden oder auch ovalen Stumpfschweissverbindungsenden des Fittings verschweisst wird.

Ein weiterer Vorteil liegt darin, dass das Teleskoprohr nicht bearbeitet bzw. geschält werden muss bevor es bzw. das Fitting an dem zu verbindenden Rohrleitungsenden montiert wird. Dadurch, dass die Schweisszone des Teleskoprohres bis zur Montage geschützt in der Teleskop-Elektroschweissmuffe angeordnet ist bzw. sich in eingefahrener Position befindet, ist es gut vor den äusseren Einflüssen geschützt.

Zudem besteht auch die Möglichkeit das Fitting zu verpacken um es vor Oxidation und anderen Einflüssen zu schützen, was bei langen Rohrleitungen eigentlich nicht möglich ist.

Die Stumpfschweissverbindungsenden des Fittings bzw. die Stirnseiten des Fittings die als Stumpfschweissverbindung ausgebildet sind können am Teleskoprohr wie auch direkt an der Teleskop-Elektroschweissmuffe angeordnet sein. Die Stumpfschweissverbindungsenden werden dann mit den jeweiligen Rohrenden verbunden bzw. stumpfgeschweisst. Um dies zu erreichen wird das Fitting durch Ausziehen des Teleskoprohres in die gewünschte Position gebracht, vorzugsweise mithilfe einer entsprechenden Stumpfschweissmaschine, welche die Ausrichtung des Fittings in Bezug auf die Rohrleitung unterstützt. Daraufhin werden die Stumpfschweissenden des Fittings mit den Rohrenden der zu verbindenden Rohrleitungen stumpfgeschweisst. Während der Abkühlung dieser Stumpfschweissungen wird eine beinahe spaltenfreie Elektroschweissung des Fittings zwischen Teleskop-Elektroschweissmuffe und Teleskoprohr des Fittings durchgeführt. Das wird dadurch erreicht, dass das Teleskoprohr beinahe spaltenfrei in der Teleskop-Elektroschweissmuffe angeordnet ist. Die Breite des Spalts liegt im Bereich von 0 bis 2.0‰ des Aussendurchmessers des Teleskoprohres bzw. des Innendurchmessers der Teleskop-Elektroschweissmuffe.

Eine bevorzugte Ausführungsform besteht darin, dass am Aussendurchmesser des Teleskoprohres eine Dichtung angeordnet ist. Diese Dichtung gewährleistet die Dichtheit zwischen Teleskoprohr und Teleskop-Elektroschweissmuffe. Vorzugsweise ist die Dichtung als O-Ring ausgebildet oder als eine Dichtlippe, die direkt am Rohr angeformt ist.

Gemäss einer bevorzugten Ausführungsform weist das Teleskoprohr eine Dichtung am Aussendurchmesser auf, wobei in ausgefahrenen Zustand des Teleskoprohres die Dichtung in der Teleskop-Elektroschweissmuffe angeordnet ist um die Dichtheit zwischen Teleskoprohr und Teleskop-Elektroschweissmuffe zu gewährleisten.

Eine weitere Ausgestaltung der Erfindung besteht darin, dass eine Dichtung am Innendurchmesser der Teleskop-Elektroschweissmuffe angeordnet ist. Wobei die 5

Dichtung am Innendurchmesser der Teleskop-Elektroschweissmuffe angeordnet ist in dem auch das Teleskoprohr angeordnet ist. Diese gewährleistet die Dichtheit des Fittings bzw. die Dichtheit zwischen Teleskop-Elektroschweissmuffe und Teleskoprohr sowie sie auch als Schmutzbarriere dient. Selbstverständlich kann ein erfindungsgemässes Fitting eine Dichtung am Innendurchmesser der Teleskop-Elektroschweissmuffe wie auch am Aussendurchmesser des Teleskoprohres aufweisen.

Die Schweissverbindungsenden an den Stirnseiten des Fittings, das heisst am Teleskoprohr oder an der Teleskop-Elektroschweissmuffe sind als Stupfschweissverbindungsenden ausgebildet. Sie können aber auch noch andere Bauformen aufweisen, wie beispielsweise einen Vorschweissbund.

Weitere Bauformen, welche auch kombinierbar sind, sind beispielsweise ein Fitting das als T-Stück ausgebildet ist oder als Winkelstück. Wobei vorzugsweise die Teleskop-Elektroschweissmuffe die entsprechende Bauform aufweist und das eingesetzte Teleskoprohr gerade ausgebildet ist.

Als weitere Bauform ist auch ein Reduktionsstück denkbar, welches ermöglicht unterschiedliche Rohrdimensionen miteinander zu verbinden.

Die Fittings, das heisst die Teleskop-Elektroschweissmuffe wie auch das Teleskoprohr sind vorzugsweise aus einem der Kunststoffe PP, PE, PB oder PA hergestellt, das sich diese gut für eine Schweissung eignen.

Dieser Art des Fittings wird vorzugsweise bei grösser dimensionierten Rohrleitungen eingesetzt, vorzugsweise bei einem Nenndurchmesser ab 200mm. Ausführungsbeispiele der Erfindung werden anhand der Figuren beschrieben, wobei sich die Erfindung nicht nur auf diese Ausführungsbeispiele beschränkt. Es zeigen:
Fig. 1a Montageschritte eines erfindungsgemässen Fittings im Längsschnitt,
Fig. 1b Montageschritte eines nicht erfindungsgemässen Fittings im Längsschnitt,
Fig. 2 einen Längsschnitt durch ein erfindungsgemässes Fitting, wobei der Längsschnitt zwei Montagepositionen zeigt und
Fig. 3 einen Längsschnitt durch ein erfindungsgemässes Fitting als T-Stück ausgebildet, wobei der Längsschnitt zwei Montagepositionen zeigt.

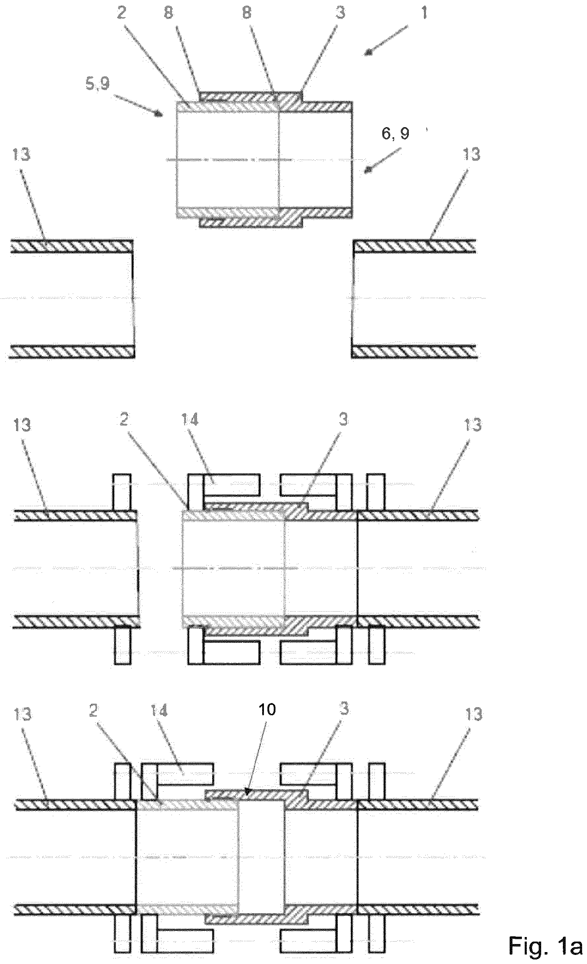

In Fig. 1a wird ein erfindungsgemässes Fitting 1 gezeigt, das in einer Rohrleitung eingebaut wird. Das Fitting 1 wird in eingefahrenem Zustand in die bestehende Lücke zwischen den Rohrleitungsenden 13 eingesetzt. In der abgebildeten Fig. 1a werden zwei Rohrleitungsenden 13 durch das Fitting 1 miteinander verbunden, wobei auch eine Verbindung von weiteren Rohrleitungsenden denkbar ist, bspw. mithilfe eine Fittings das als T-Stücks oder auch als Kreuzstück ausgebildet ist.

In der in Fig.1a abgebildeten Ausführungsform weist das Fitting 1 eine Teleskop-Elektroschweissmuffe 3 auf, in der ein Teleskoprohr 2 angeordnet ist. Dadurch, dass das Teleskoprohr 2 noch im eingefahrenen Zustand ist, kann das Fitting 1 problemlos in den Zwischenraum bzw. die Lücke zwischen den beiden Rohrleitungsenden 13 eingesetzt werden. Zudem ist die Aussenfläche des Teleskoprohres vor Verunreinigungen und Oxidation geschützt. Die Stirnseite 5 des Teleskoprohres 2 und die gegenüberliegende Stirnseite 6 der Teleskop-Elektroschweissmuffe sind als Stumpfschweissverbindungsenden 9 ausgebildet, weshalb die Rohrleitungsenden 13 mit den Stumpfschweissverbindungsenden 9 des Fittings 1 mittels Stumpfschweissen verbunden werden. Vorzugsweise wird das Fitting 1, wie in der zweiten Abbildung aus Fig. 1a ersichtlich, in eine Stumpfschweissmaschine 14 eingelegt, welche das Fitting 1 entsprechend den Rohrleitungsenden 13 ausrichtet und den Schweissprozess unterstützt. Die Teleskop-Elektroschweissmuffe 3 ist in der zweiten Abbildung bereits mit dem einen Rohrleitungsende 13 mittels Stumpfschweissen verbunden. Das Teleskoprohr 2 ist immer noch im eingefahrenen Zustand in der Teleskop-Elektroschweissmuffe 3 angeordnet. Als nächster Schritt erfolgt der Auszug des Teleskoprohrs 2 aus der Teleskop-Elektroschweissmuffe 3 und wird mit dem anderen Rohrleitungsende 13 stumpfgeschweisst. Selbstverständlich wird das Teleskoprohr 2 und die Teleskop-Elektroschweissmuffe 3 sowie die Rohrleitungsenden 13 entsprechend eines herkömmlichen Stumpfschweissvorgangs erwärmt um dann miteinander verschweisst zu werden. In der dritten Abbildung ist das fertig eingebaute Fitting 1 ersichtlich. Gut erkennbar ist, dass das Teleskoprohr 2 in ausgefahrener Position ist. In diesem Zustand wird das Teleskoprohr 2 anschliessend mit der Teleskop-Elektroschweissmuffe 3 im Bereich der Schweisszone 4 mittels Heizwicklungen, welche in der Teleskop-Elektroschweissmuffe 3 angeordnet ist verschweisst. Um eine optimale Dichtheit des Fittings 1 zu gewährleisten sowie auch ein Schutz vor Verschmutzung sind vorzugsweise Dichtungen 8 am Fitting 1 angeordnet. Einerseits ist am Aussendurchmesser des Teleskoprohres 2 eine Dichtung 8 angeordnet bspw. durch eine direkt am Rohrende angeformte Dichtlippe auch ein O-Ring ist als Abdichtung vorstellbar. Zudem ist es Vorteilhaft, wenn sich auch eine Dichtung 8 am Innendurchmesser der Teleskop-Elektroschweissmuffe 3 befindet. Vorzugsweise am vorderen Ende der Muffe 3 in der das Teleskoprohr 2 eingeschoben ist. Wie aus den Abbildungen ersichtlich ist, verschiebt sich die Dichtung, welche am Aussendurchmesser des Teleskoprohres 2 angeordnet ist mit dem Ausziehen des Teleskoprohres 2 mit.

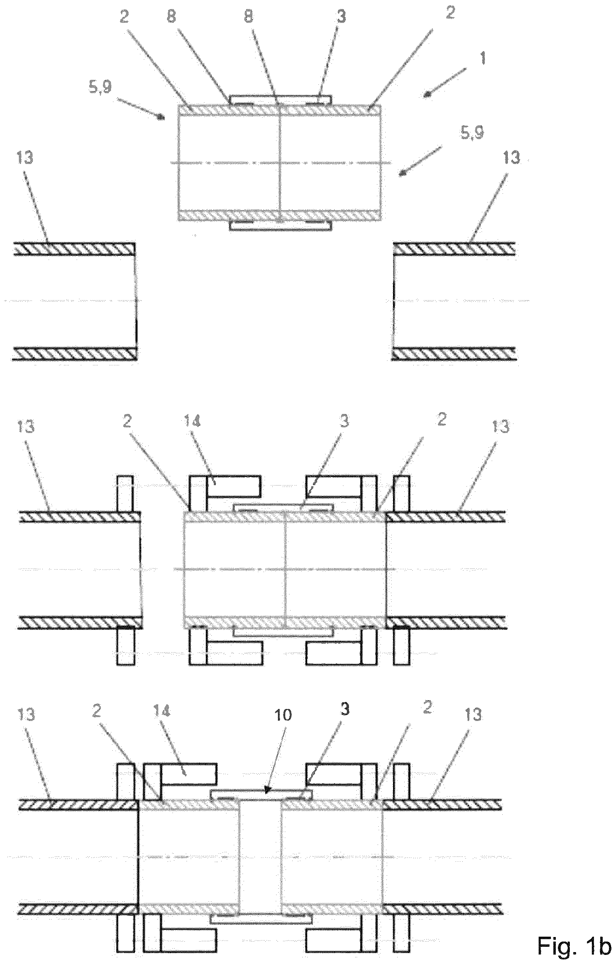

In Fig. 1b ist eine nicht erfindungsgemäßen Ausführungsform eines Fittings 1 gezeigt, das in einer Rohrleitung eingebaut wird. Das Fitting 1 wird in eingefahrenem Zustand in die bestehende Lücke zwischen den Rohrleitungsenden 13 eingesetzt. In der abgebildeten Fig. 1b werden zwei Rohrleitungsenden 13 durch das Fitting 1 miteinander verbunden.

In der in Fig.1b abgebildeten nicht erfindungsgemäßen Ausführungsform weist das Fitting 1 eine Teleskop-Elektroschweissmuffe 3 auf, in der zwei Teleskoprohre 2 angeordnet sind. Dadurch, dass die Teleskoprohre 2 noch im eingefahrenen Zustand sind, kann das Fitting 1 problemlos in den Zwischenraum bzw. die Lücke zwischen den beiden Rohrleitungsenden 13 eingesetzt werden. Die Stirnseiten 5 der Teleskoprohre 2 sind als Stumpfschweissverbindungsenden 9 ausgebildet. Die Rohrleitungsenden 13 werden deshalb mit den Stumpfschweissverbindungsenden 9 der Teleskoprohre 2 mittels Stumpfschweissen verbunden. Vorzugsweise wird das Fitting 1, wie in der zweiten Abbildung aus Fig. 1b ersichtlich, in eine Stumpfschweissmaschine 14 eingelegt, welche das Fitting 1 entsprechend den Rohrleitungsenden 13 ausrichtet und den Schweissprozess unterstützt. Das eine Teleskoprohr 2 ist in dieser Abbildung bereits mit dem einen Rohrleitungsende 13 mittels Stumpfschweissen verbunden. Das zweite Teleskoprohr 2 ist immer noch im eingefahrenen Zustand in der Teleskop-Elektroschweissmuffe 3 angeordnet. Als nächster Schritt erfolgt der Auszug des zweiten Teleskoprohrs 2 aus der Teleskop-Elektroschweissmuffe 3 und wird mit dem anderen Rohrleitungsende 13 stumpfgeschweisst. Selbstverständlich werden die Teleskoprohre 2 sowie die Rohrleitungsenden 13 entsprechend eines herkömmlichen Stumpfschweissvorgangs erwärmt um dann miteinander verschweisst zu werden. In der dritten Abbildung ist das fertig eingebaute Fitting 1 ersichtlich. Gut erkennbar sind die Teleskoprohre 2 in ausgefahrenem Zustand. In diesem Zustand werden die Teleskoprohre 2 anschliessend mit der Teleskop-Elektroschweissmuffe 3 im Bereich der Schweisszonen 4 vorzugsweise mittels Heizdrahtwicklungen, welche in der Teleskop-Elektroschweissmuffe 3 angeordnet sind, verschweisst. In diesem Fall sind vorzugsweise zwei Heizdrahtwicklungen in der Teleskop-Elektroschweissmuffe 3 angeordnet, die jeweils eines der Teleskoprohre 2 mit der Teleskop-Elektroschweissmuffe 3 verschweissen.

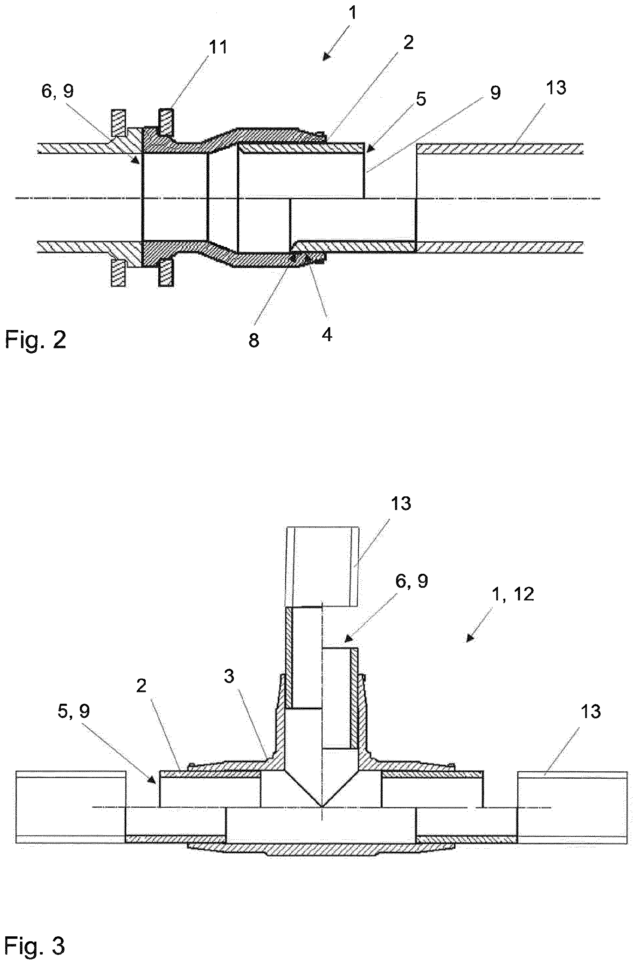

Fig. 2 zeigt einen Längsschnitt eines erfindungsgemässen Fittings 1, welcher einerseits im noch nicht fertig montierten Zustand abgebildet ist und andererseits zeigt der untere Teilschnitt des Längsschnitts das fertig montierte Fitting 1. Diese Ausführungsform eines erfindungsgemässen Fittings 1 weist nur ein Teleskoprohr 2 auf, welches in der Teleskop-Elektroschweissmuffe 3 angeordnet ist. Die Teleskop-Elektroschweissmuffe 3 und das Teleskoprohr 2 weisen nur einen minimalen Spalten zwischen Muffe 3 und Teleskoprohr 2 auf, dieser ermöglicht ein Ausziehen des Teleskoprohres 2.

Die obere Hälfte des Längsschnitts zeigt das Fitting 1, welches eine Teleskop-Elektroschweissmuffe 3 mit darin angeordnetem Teleskoprohr 2 aufweist, in eingefahrenem Zustand. Die Teleskop-Elektroschweissmuffe 3, welche bei der abgebildeten Ausführungsform direkt mit dem Rohrleitungsende 13 stumpf zu schweissen ist, weist an der Stirnseite 6 einen Vorschweissbund 11 auf, selbstverständlich wäre auch ein herkömmliches Stumpfschweissverbindungsende 9 vorstellbar. Anschliessend wird das Teleskoprohr 2 auf das gegenüberliegende Rohrleitungsende 13 ausgefahren und damit stumpfverschweisst. Die Stirnseite 5 des Teleskoprohres 2 entspricht einem Stumpfschweissverbindungsende 9, dadurch ist ein einfaches Zusammenfügen bspw. mithilfe einer Stumpfschweissmaschine (hier nicht sichtbar) möglich.

Das Fitting 1 ist durch seine Ausziehbarkeit individuell auf die benötigte Länge zur Überbrückung der Lücke einstellbar. Der Aussendurchmesser 7 des Teleskoprohres 2 entspricht in etwa dem Innendurchmesser 10 der Teleskop-Elektroschweissmuffe 3, so dass ein minimaler Spalt dazwischen entsteht der einer Breite von 0 bis 2 %o des Aussendurchmessers 7 des Teleskoprohres 2 bzw. des Innendurchmesser 10 der Teleskop-Elektroschweissmuffe 3 entspricht, wodurch das Teleskoprohr 2 gut und einfach in der Muffe 3 verschiebbar ist.

Wenn die beiden Stumpfschweissverbindungsenden 9 mit den zu verbindenden Rohrleitungsenden 13 verschweisst sind, kann während des Abkühlvorgangs bereits schon die Elektroschweissung zwischen Teleskop-Elektroschweissmuffe 3 und Teleskoprohr 2 durchgeführt werden.

Vorzugsweise befindet sich am Aussendurchmesser 7 des Teleskoprohres 2 eine Dichtung 8, diese gewährleistet die Dichtheit des Fittings 1. Vorzugsweise ist die Dichtung 8 als O-Ring oder als direkt angeformte Dichtlippe ausgebildet und ist derart angeordnet, dass die Dichtung 8 auch bei maximal ausgefahrenem Teleskoprohr 2 noch innerhalb der Teleskop-Elektroschweissmuffe 3 angeordnet ist. Die Teleskop-Elektroschweissmuffe 3 weist in der Schweisszone 4 mindestens eine Heizdrahtwicklung auf, die eine Elektroschweissung zwischen Muffe 3 und Teleskoprohr 2 ermöglicht.

In Fig. 3 wird ein erfindungsgemässes Fitting 1 gezeigt, welches als T-Stück 12 ausgebildet ist. Die Teleskop-Elektroschweissmuffe 3 hat die Form eines T-Stücks und ermöglicht so drei Rohrleitungsenden 13 miteinander zu verbinden. Bei einem erfindungsgemässen Fitting 1 ist es auch möglich weitere Ausführungsformen wie bspw. Kreuzstücke, Bogenstücke, Winkelstücke usw. umzusetzen. Auch Reduzierungsstücke sind denkbar, die es ermöglichen unterschiedliche Rohrleitungsquerschnitte miteinander zu verbinden oder auch Kombinationen der einzelnen Ausführungsformen mit bspw. einem Reduzierstück sind möglich. Die eingesetzten Komponenten in Fig. 3 entsprechen ebenfalls den zuvor bereits aufgeführten Komponenten. Die Teleskoprohre 2 weisen an ihren Stirnseiten 6 ein Stumpfschweissverbindungsende 9 auf, welches durch Stumpfschweissen mit den zu verbindenden Rohrleitungsenden 13 stumpfgeschweisst wird. Auch das in Fig. 3 abgebildete Fitting 1 hat vorzugsweise eine Dichtung, welche am Aussendurchmesser 7 der Teleskoprohre 2 oder alternativ am Innendurchmesser 10 der Teleskop-Elektroschweissmuffe 3 angeordnet ist auch eine Kombination von beiden Dichtungen ist möglich, wie die vorgängigen Ausführungsformen des Fittings 1 bereits gezeigt haben. Auch das in Fig. 3 dargestellte Fitting 1 wie auch andere Ausführungsformen können alternativ einen Vorschweissbund anstelle eines normalen Stumpfschweissverbindungsendes aufweisen.

## Patentansprüche

1. Anordnung zum Verbinden von Rohrleitungen vorzugsweise Kunststoffrohrleitungen umfassend die Rohrleitungsenden (13) der Rohrleitung, einen Fitting (1) enthaltend mindestens ein Teleskoprohr (2) und eine Teleskop-Elektroschweissmuffe (3) mit mindestens einer Heizwicklung (4), wobei das Teleskoprohr (2) vor der Verschweissung mit der Teleskop-Elektroschweissmuffe (3) verschiebbar in der Teleskop-Elektroschweissmuffe (3) angeordnet ist und nach der Verschweissung in ausgefahrenem Zustand das Teleskoprohr (2) mit der Teleskop-Elektroschweissmuffe (3) fest verschweisst ist, wobei die stirnseitigen Enden (5, 6) des Fittings (1) als Stumpfschweissverbindungsenden (9) zum Stumpfschweissen mit den anzuschliessenden Rohrleitungsenden (13) ausgebildet sind, wobei die Anordnung durch die folgenden Schritte ausgebildet ist: durch Stumpfschweissen verbinden der Elektroschweissmuffe (3) mit dem einen Rohrleitungsende (13), wobei das Teleskoprohr (2) immer noch im eingefahrenen Zustand in der Teleskop-Elektroschweissmuffe (3) angeordnet ist; Ausziehen des Teleskoprohres (2) aus der Teleskop-Elektroschweissmuffe (3) so dass das Teleskoprohr (2) in ausgefahrener Position wird, und Stumpfschweissen des Teleskoprohres (2) mit dem anderen Rohrleitungsende (13); anschliessendes Verschweissen des in ausgefahrenem Zustand befindliches Teleskoprohres (2) mit der Teleskop-Elektroschweissmuffe (3) im Bereich der Schweisszone (4) mittels Heizwicklung (4).

2. Anordnung nach Anspruch 1, **dadurch gekennzeichnet, dass** die Breite des Spalts zwischen dem Aussendurchmesser des Teleskoprohrs (2) und dem Innendurchmesser der Teleskop-Elektroschweissmuffe (3) von 0 bis 2 %o des Aussendurchmesser (7) des Teleskoprohres (2) bzw. des Innendurchmessers (10) der Teleskop-Elektroschweissmuffe (3) aufweist.

3. Anordnung nach einem der Ansprüche 1 oder 2, **dadurch gekennzeichnet, dass** der Aussendurchmesser (7) des Teleskoprohres (2) einen Toleranzbereich von -1‰ bis 0 des Aussendurchmessers und der Innendurchmesser (10) der Teleskop-Elektroschweissmuffe einen Toleranzbereich von 0 bis +1‰ des Innendurchmessers aufweist.

4. Anordnung nach einem der Ansprüche 1 bis 3, **dadurch gekennzeichnet, dass** am Aussendurchmesser (7) des Teleskoprohres (2) eine Dichtung (8) angeordnet ist.

5. Anordnung nach einem der Ansprüche 1 bis 4, **dadurch gekennzeichnet, dass** die Dichtung (8) am Aussendurchmesser (7) des Teleskoprohres (2) im ausgefahrenen Zustand des Teleskoprohres (2) noch in der Teleskop-Elektroschweissmuffe (3) angeordnet ist um die Dichtheit zwischen Teleskoprohr (2) und Teleskop-Elektroschweissmuffe (3) zu gewährleisten.

6. Anordnung nach einem der Ansprüche 1 bis 5, **dadurch gekennzeichnet, dass** eine Dichtung (8) am Innendurchmesser (10) der Teleskop-Elektroschweissmuffe (3) angeordnet ist.

7. Anordnung nach einem der Ansprüche 1 bis 6, **dadurch gekennzeichnet, dass** mindestens ein Stumpfschweissverbindungsende (9) als Vorschweissbund (11) ausgebildet ist.

8. Anordnung nach einem der Ansprüche 1 bis 7, **dadurch gekennzeichnet, dass** das Fitting (1) als T-Stück ausgebildet ist.

9. Anordnung nach einem der Ansprüche 1 bis 8, **dadurch gekennzeichnet, dass** das Fitting (1) als Winkelstück ausgebildet ist.

10. Anordnung nach einem der Ansprüche 1 bis 9, **dadurch gekennzeichnet, dass** das Fitting (1) als Reduktionsstück ausgebildet ist.

11. Anordnung nach einem der vorhergehenden Ansprüche, **dadurch gekennzeichnet, dass** das Fitting (1) aus einem der Kunststoffe PP, PE, PB oder PA hergestellt ist.

12. Anordnung nach einem der vorhergehenden Ansprüche, **dadurch gekennzeichnet, dass** der Fitting (1) eine Nenndurchmesser von mindestens 200 mm aufweist.

## Claims

1. Arrangement for connecting pipelines, preferably plastic pipelines, comprising the pipeline ends (13) of the pipeline, a fitting (1) including at least one telescopic tube (2) and a telescopic electric welding sleeve (3) with at least one heating coil (4), the telescopic tube (2) being arranged displaceably in the telescopic electric welding sleeve (3) before the welding to the telescopic electric welding sleeve (3) and the telescopic tube (2) being firmly welded to the telescopic electric welding sleeve (3) in the extended state after the welding, the ends (5, 6) at the end faces of the fitting (1) being formed as butt-welded connecting ends (9) for butt welding to the pipeline ends (13) to be connected, the arrangement being formed by the following steps: connecting the electric welding sleeve (3) to the one pipeline end (13) by butt welding, the telescopic tube (2) still being arranged in the retracted state in the telescopic electric welding sleeve (3); extending the telescopic tube (2) out of the telescopic electric welding sleeve (3), so that the telescopic tube (2) is in the extended position, and butt welding the telescopic tube (2) to the other pipeline end (13); subsequently welding the telescopic tube (2) in the extended state to the telescopic electric welding sleeve (3) in the region of the welding zone (4) by means of the heating coil (4) .

2. Arrangement according to Claim 1, **characterized in that** the width of the gap between the outer diameter of the telescopic tube (2) and the inner diameter of the telescopic electric welding sleeve (3) comprises from 0 to 2‰ of the outer diameter (7) of the telescopic tube (2) or of the inner diameter (10) of the telescopic electric welding sleeve (3).

3. Arrangement according to either of Claims 1 and 2, **characterized in that** the outer diameter (7) of the telescopic tube (2) has a tolerance range of -1‰ to 0 of the outer diameter and the inner diameter (10) of the telescopic electric welding sleeve has a tolerance range of 0 to +1‰ of the inner diameter.

4. Arrangement according to one of Claims 1 to 3, **characterized in that** a seal (8) is arranged on the outer diameter (7) of the telescopic tube (2).

5. Arrangement according to one of Claims 1 to 4, **characterized in that**, in the extended state of the telescopic tube (2), the seal (8) on the outer diameter (7) of the telescopic tube (2) is still arranged in the telescopic electric welding sleeve (3) in order to ensure the seal-tightness between the telescopic tube (2) and the telescopic electric welding sleeve (3).

6. Arrangement according to one of Claims 1 to 5, **characterized in that** a seal (8) is arranged on the inner diameter (10) of the telescopic electric welding sleeve (3).

7. Arrangement according to one of Claims 1 to 6, **characterized in that** at least one butt-welded connecting end (9) is formed as a stub end (11).

8. Arrangement according to one of Claims 1 to 7, **characterized in that** the fitting (1) is formed as a T piece.

9. Arrangement according to one of Claims 1 to 8, **characterized in that** the fitting (1) is formed as an angle piece.

10. Arrangement according to one of Claims 1 to 9, **characterized in that** the fitting (1) is formed as a reduction piece.

11. Arrangement according to one of the preceding claims, **characterized in that** the fitting (1) is produced from one of the plastics PP, PE, PB or PA.

12. Arrangement according to one of the preceding claims, **characterized in that** the fitting (1) has a nominal diameter of at least 200 mm.

## Revendications

1. Ensemble destiné à relier des conduits tubulaires, de préférence des conduits tubulaires en matière synthétique, comprenant les extrémités (13) du conduit tubulaire, un raccord (1) contenant au moins un tube télescopique (2) et un manchon télescopique d'électro-soudage (3) présentant au moins un enroulement de chauffage (4), le tube télescopique (2) étant disposé à coulissement dans le manchon télescopique d'électro-soudage (3) en le soudage avec le manchon télescopique d'électro-soudage (3) et, après le soudage, le tube télescopique (2) étant soudé solidairement au manchon télescopique d'électro-soudage (3) en position déployée, les extrémités frontales (5, 6) du raccord (1) étant configurées comme extrémités (9) de liaison par soudage bout à bout en vue du soudage bout à bout sur les extrémités (13) des conduits tubulaires à raccorder, l'agencement étant formé par les étapes suivantes :
par soudage bout à bout, liaison du manchon télescopique d'électro-soudage (3) à l'une des - extrémités (13), le tube télescopique (2) étant toujours disposé à l'état rétracté dans le manchon télescopique d'électro-soudage (3),
extraction du tube télescopique (2) hors du manchon télescopique d'électro-soudage (3) de telle sorte que le tube télescopique (2) prenne une position déployée, soudage bout à bout du tube télescopique (2) sur l'autre extrémité (13) et
ensuite, soudage du tube télescopique (2) sur le manchon télescopique d'électro-soudage (3) en position déployée au niveau de la zone de soudage (4) au moyen de l'enroulement de chauffage (4).

2. Ensemble selon la revendication 1, **caractérisé en ce que** la largeur de l'interstice entre le diamètre extérieur du tube télescopique (2) et le diamètre intérieur du manchon télescopique d'électro-soudage (3) représente de 0 à 2 pour mille du diamètre extérieur (7) du tube télescopique (2) ou du diamètre intérieur (10) du manchon télescopique d'électro-soudage (3).

3. Ensemble selon l'une des revendications 1 ou 2, **caractérisé en ce que** le diamètre extérieur (7) du tube télescopique (2) présente une plage de tolérance de - 1 pour mille à 0 du diamètre extérieur et le diamètre intérieur (10) du manchon télescopique d'électro-soudage présente une plage de tolérance de 0 à +1 pour mille du diamètre intérieur.

4. Ensemble selon l'une des revendications 1 à 3, **caractérisé en ce qu'**un joint d'étanchéité (8) est disposé sur le diamètre extérieur (7) du tube télescopique (2).

5. Ensemble selon l'une des revendications 1 à 4, **caractérisé en ce que** le joint d'étanchéité (8) est disposé sur le diamètre extérieur (7) du tube télescopique (2) pendant que le tube télescopique (2) est encore déployé dans le manchon télescopique d'électro-soudage (3), pour garantir l'étanchéité entre le tube télescopique (2) et le manchon télescopique d'électro-soudage (3).

6. Ensemble selon l'une des revendications 1 à 5, **caractérisé en ce qu'**un joint d'étanchéité (8) est disposé sur le diamètre intérieur (10) du manchon télescopique d'électro-soudage (3).

7. Ensemble selon l'une des revendications 1 à 6, **caractérisé en ce qu'**au moins une extrémité (9) de liaison par soudage bout à bout est configurée comme collet pré-soudé (11).

8. Ensemble selon l'une des revendications 1 à 7, **caractérisé en ce que** le raccord (1) est configuré comme té.

9. Ensemble selon l'une des revendications 1 à 8, **caractérisé en ce que** le raccord (1) est configuré comme coude.

10. Ensemble selon l'une des revendications 1 à 9, **caractérisé en ce que** le raccord (1) est configuré comme réduction.

11. Ensemble selon l'une des revendications précédentes, **caractérisé en ce que** le raccord (1) est réalisé en une des matières synthétiques PP, PE, PB ou PA.

12. Ensemble selon l'une des revendications précédentes, **caractérisé en ce que** le raccord (1)présente un diamètre nominal d'au moins 200 mm.
